# EUROPÄISCHE PATENTSCHRIFT

(11) **EP 1 327 100 B1**
(45) Veröffentlichungstag und Bekanntmachung des Hinweises auf die Patenterteilung: **09.11.2005**
(21) Anmeldenummer: 01951678.0
(22) Anmeldetag: 14.07.2001
(51) Int. Cl.: F16N 13/10, B25D 17/26

(54) **SELBSTTÄTIGE SCHMIEREINRICHTUNG**
AUTOGENOUS LUBRICATING DEVICE
DISPOSITIF DE LUBRIFICATION AUTOMATIQUE

(30) Priorität: 16.10.2000 DE 10051289; 28.10.2000 DE 10053642; 12.04.2001 DE 10118284
(43) Veröffentlichungstag der Anmeldung: 16.07.2003
(73) Patentinhaber: Lincoln GmbH & Co. KG, 69190 Walldorf (DE)
(72) Erfinder: RODEMER, Karl, 69126 Heidelberg (DE); SCHÖNFELD, Andreas, 68789 St.Leon-Rot (DE); PALUNCIC, Zdravko, 67067 Ludwigshafen (DE)
(74) Vertreter: KEIL & SCHAAFHAUSEN Patentanwälte
(86) Internationale Anmeldenummer: PCT/EP2001/008150
(87) Internationale Veröffentlichungsnummer: WO 2002/033309

(56) Entgegenhaltungen:
- EP-A1- 1 052 445
- EP-A2- 1 112 820
- US-A- 4 955 792
- US-A- 5 060 761

## Beschreibung

Die Erfindung bezieht sich auf eine selbsttätige Schmiereinrichtung an einem mittels eines Hydraulik-Druckmediums, z. B. Hydrauliköls, antreibbaren Werkzeug oder dgl., mit einer ein Pumpenelement aufweisenden Schmierstoffpumpe zur Förderung eines Schmierstoffes, z. B. Schmierfettes, aus einem Vorratsbehälter zu einer oder mehreren mit Schmierstoff zu beaufschlagenden Stellen des Werkzeugs, wobei der Schmierstoff entweder aufgrund seines eigenen Fließverhaltens und/oder mittels aufgebrachtem Druck dem Förderraum des Pumpenelements und von dem Pumpenelement der Schmierstelle zuführbar ist, sowie mit Mitteln zum Erzeugen eines Pumpenhubes des Pumpenelements beim Betreiben des Werkzeugs. Als solche Werkzeuge kommen z.B. hydraulische Schlagwerkzeuge oder Zangen in Frage.

Aus der EP-A-0 430 024 ist eine automatische Schmiereinrichtung für den Meißel eines hydraulischen Schlagwerks mit einer an einem Schmiermittelvorratsbehälter angeschlossenen Fördereinheit bekannt, mittels welcher die den Meißel abstützende Meißelführung mit Schmierfett beaufschlagbar ist. Der mit Schmierfett gefüllte Schmiermittel-Vorratsbehälter weist ein bewegliches Trennelement und eine über dieses auf das Schmierfett einwirkende, vorgespannte Druckfeder auf, über welche das Schmierfett dem Förderraum der Fördereinheit zuführbar ist. Der Förderdruck der Fördereinheit wird hierbei von dem das Schlagwerk antreibenden Betriebsdruck hervorgerufen und die Fördereinheit führt jeweils bei Beaufschlagung des Schlagwerks mit dem Betriebsdruck einen vorgegebenen Förderhub mit einstellbarer Größe auf. Nachteilig hierbei ist, dass die Schmiermittelpumpe als Einhubzylinderpumpe ausgebildet ist, deren eine Seite von dem Hydrauliköl der Meißelbetätigung und deren andere Seite von einer Feder beaufschlagt ist. Dabei wird nur einmal, und zwar vor dem eigentlichen Betrieb des Schlagwerkzeugs, Schmierfett abgegeben. Beim Betrieb eines hydraulischen Meißelschlagwerks liegt der Hydrauliköldruck z.B. bei etwa 150 bar. Bei Beendigung des Betriebes fällt der Druck nur langsam so weit ab, z. B. auf unter 10 bar, dass die Feder den Druckkolben nur mit entsprechender Verzögerung in seine Ausgangslage zurückschieben kann. Die Pausenzeiten, bis das Schlagwerk wieder in Funktion treten kann, sind daher zu lange. Bei manchen Schlagwerken fällt der Druck in der Hauptleitung überhaupt nicht auf einen Wert ab, bei welchem die Feder den Druckkolben in seine Ausgangslage zurückschieben kann. In diesen Fällen ist der Einsatz eines zusätzlichen Überdruckventils erforderlich, was zusätzliche Kosten verursacht.

Aufgabe der vorliegenden Erfindung ist es, eine Schmiereinrichtung der eingangs genannten Art vorzuschlagen, welche unabhängig vom Entlastungsdruck arbeitet kontinuierlich während der gesamten Dauer des Arbeitens des Werkzeuges und eine zuverlässige Funktion dauerhaft gewährleistet.

Diese Aufgabe wird mit der Erfindung bei einer Schmiereinrichtung der eingangs genannten Art bspw. dadurch gelöst, dass ein Exzenter, dessen Exzenterfläche mit dem Förderkolben des Pumpenelements zusammenwirkt, über einen Freilauf (eine Einwegkupplung) auf einem Wellenkörper gelagert ist und dass der Antrieb des Exzenters über das freie Ende eines Schaltkolbens eines Progressivverteilers erfolgt, welcher in einer das Werkzeug überbrückenden Bypassleitung der Hydraulik-Druckleitung für die Betätigung des Werkzeugs liegt.

Anders als beim Stand der Technik wird also nicht der Förderdruck der Fördereinheit von dem das Schlagwerk antreibenden Betriebsdruck hervorgerufen und die Fördereinheit führt auch nicht jeweils nur einmal bei Beaufschlagung des Schlagwerks mit dem Betriebsdruck einen vorgegebenen Förderhub mit einstellbarer Größe aus, sondern das Pumpenelement wird von einem Exzenter aus betätigt, auf welchen seinerseits ein Schaltkolben eines Progressivverteilers einwirkt, dessen einer Schaltkolben nach Art eines Anzeigestiftes aus dem Verteilergehäuse herausgeführt sein kann. Je nach der Anzahl der Verteilersegmente des Progressivverteilers erfolgt die Schmierstoffabgabe an die Schmierstelle während des Arbeitens des Werkzeuges mehr oder weniger oft. Die Rückstellung des Exzenters erfolgt dabei nicht durch eine Reaktion des Pumpenelements, sondern unabhängig davon, z. B. dadurch, dass die Auslenkung des Exzenters aus einer Ruhelage mittels des Schaltkolbenendes gegen die Wirkung einer Rückstellkraft, insbesondere einer Rückstellfeder, erfolgt, welche in Umfangsrichtung des Exzenters wirkt.

In weiterer Ausgestaltung des Erfindungsgedankens ist die Rückstellkraft, z. B. über eine auf die Rückstellfeder wirkende Stellschraube einstellbar. Auf diese Weise kann die Auslenkung des Exzenters und damit die bei jedem Hub abzugebende Schmierstoffmenge gesteuert werden.

Mit der Erfindung wird ferner vorgeschlagen, dass das Hydraulik-Druckmedium für die Betätigung des Werkzeugs an dem Vorratsbehälter für den Schmierstoff vorbeigeleitet wird. Da das Hydraulik-Druckmedium beim Betrieb des Werkzeuges eine erhöhte Temperatur von bspw. 80°C annimmt, kann auf diese Weise der Wärmeinhalt des Hydraulik-Druckmediums zur Erwärmung des Schmierstoffes, d.h. zur Verringerung dessen Viskosität genutzt werden.

Bei einer noch weiteren Ausgestaltung der Erfindung ist an dem Progressivverteiler eine Durchlassmengenregelung, z. B. in Form einer Drossel, vorgesehen. Auf diese Weise kann die Häufigkeit der Schmierstoffabgabe an dem Schlagwerkzeug während der Arbeitsdauer des Werkzeugs eingestellt werden.

In vorteilhafter Ausgestaltung der Erfindung werden ferner Mittel für einen Druckaufbau in dem Vorratsbehälter und ein Entlüftungskanal für den Vorratsbehälter vorgeschlagen. Die Entlüftung ermöglicht eine kurzfristige Einsatzbereitschaft der Schmiereinrichtung und vermeidet Störungen der Schmierstoffförderung infolge Lufteinschluss.

Dabei weist der Vorratsbehälter z.B. einen Deckel auf, welcher axial in Richtung Behälterauslass bewegbar ist und dabei einen Kolben zur Einwirkung auf den Schmierstoffvorrat des Vorratsbehälters beaufschlagt. Dies ermöglicht eine einfache Druckerzeugung in dem Vorratsbehälter durch Betätigung des Deckels, um den Schmierstoff zu entlüften.

Vorzugsweise ist der Deckel auf die Wandung des Vorratsbehälters über ein Gewinde aufschraubbar, welches den gewünschten axialen Verstellschub gewährleistet.

In weiterer Ausgestaltung der Erfindung zweigt der Entlüftungskanal in einem Bereich zwischen dem Auslass und einem Pumpenelement von einer Schmierstoffleitung ab. Dadurch ist auch der vor dem Pumpenelement vorgesehene Leitungsbereich entlüftbar.

Es ist weiterhin vorteilhaft, wenn der Entlüftungskanal mit einem Rückschlagventil versehen ist. Der selbsttätige Verschluss des Entlüftungskanals in Richtung Umgebungsatmosphäre ermöglicht eine selbsttätige Beendigung des Entlüftungsvorganges.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: schematisch ein Schaltschema für ein Ausführungsbeispiel einer die Erfindung aufweisenden Schmiereinrichtung,
- Fig. 2: in Schrägansicht ein Ausführungsbeispiel einer Exzenteranordnung in Zuordnung zu einem Pumpenelement und Progressivverteiler einer erfindungsgemäßen Schmiereinrichtung,
- Fig. 3: die Anordnung gemäß Fig. 2 in Seitenansicht,
- Fig.4: ein Detail aus Fig. 3, welches die Einwirkung eines Schaltkolbenendes eines Progressivverteilers auf den Exzenter veranschaulicht,
- Fig. 5: schematisch die Führung des Hydraulik-Druckmediums im Bereich des Vorratsbehälters für den Schmierstoff,
- Fig. 6: eine Pumpe mit Schmierstoffbehälter im Schnitt entlang der Linie VI-VI in Fig. 8,
- Fig. 7: eine Einzelheit VII aus Fig. 6, und
- Fig. 8: eine Ansicht in Richtung des Pfeiles VIII in Fig. 6.

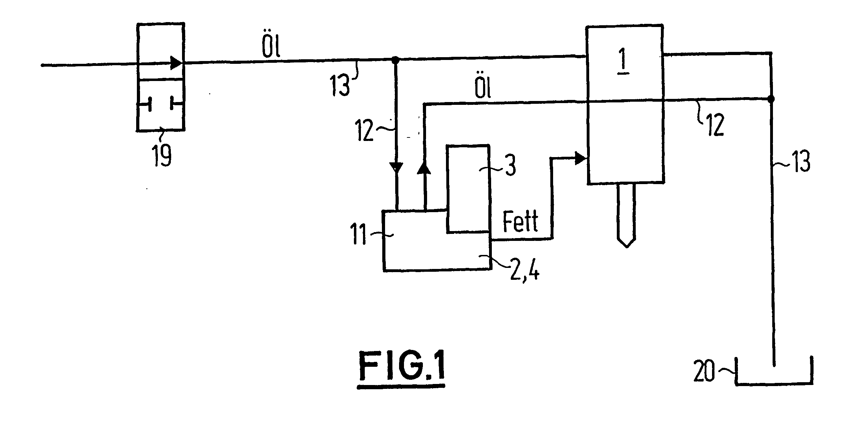

Die selbsttätige Schmiereinrichtung gemäß Fig. 1 dient z. B. der Versorgung eines hydraulischen Schlagwerkzeugs 1, wie eines Schlaghammers, mit Schmierfett an den dafür vorgesehenen Schmierstellen. Das Schlagwerkzeug 1 wird über einer Hydraulik-Druckleitung 13 mit einem Hydraulik-Druckmedium betrieben. Das Hydraulik-Druckmedium, z. B. Öl, wird von einer entsprechenden (nicht dargestellten) Pumpe aus über ein Sperrventil 19 in die Hydraulik-Druckleitung 13 eingespeist, zum Betrieb des Schlagwerkzeugs 1 verwendet und danach in einen Rückführungsbehälter 20 zurückgeführt, von wo es aus mittels der Pumpe wieder entnommen werden kann.

Von der Hydraulik-Druckleitung 13 zweigt vor dem Schlagwerkzeug 1 eine Bypassleitung 12 ab, welche über einen Progressivverteiler 11 geführt ist und nach dem Schlagwerkzeug 1 wieder in die Hydraulik-Druckleitung 13 mündet. Der Progressivverteiler 11 ist einer ein Pumpenelement 2 aufweisenden Schmierstoffpumpe 4 zugeordnet, welche ihrerseits einen Vorratsbehälter 3 für Schmierstoff, z. B. Schmierfett, aufweist, um Schmierstoff an die zu schmierenden Stellen des Schlagwerkzeugs 1 zu fördern.

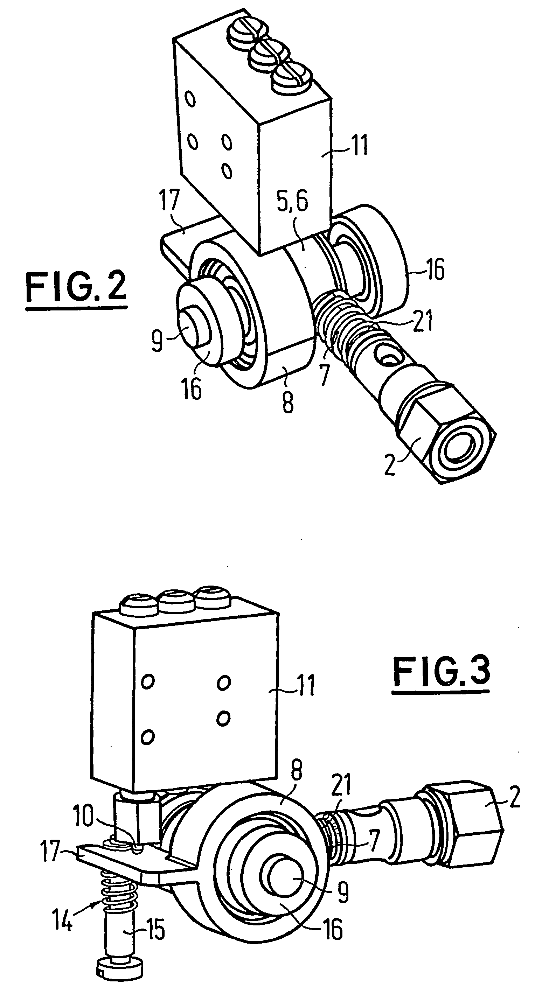

Gemäß den Darstellungen der Fig. 2 bis 5 ist ein stiftartiges Schaltkolbenende 10 des Progressivverteilers 11 aus dessen Gehäuse herausgeführt und wirkt mit einem Flanschansatz 17 eines als Einwegkupplung arbeitenden Freilaufs 8 zusammen, welcher auf einem in Lagern 16 gehaltenen Wellenkörper 19 aufgenommen ist. Mit dem Freilauf 8 ist ein eine Exzenterfläche 6 aufweisender Exzenter 5 verstellbar, wobei der Förderkolben 7 des Pumpenelements 2 über eine Feder 21 an die Exzenterfläche 6 angedrückt wird. Die Verstellung des Flanschansatzes 17 und damit des Freilaufes 18 mit dem Exzenter 5 erfolgt unter dem Einfluss einer Rückstellfeder 14, dessen Rückstellkraft mittels Stellschraube 15 einstellbar ist, um dadurch die Schmierstoffabgabemenge zu regulieren. Demgemäß wird, da die Bewegung des Schaltkolbenendes 10 von der Funktionsweise des Progressivverteilers 11 abhängt und dieser nur tätig wird, wenn das Schlagwerkzeug 1 von dem Hydraulik-Druckmedium angetrieben wird, dem Schlagwerkzeug 1 nur Schmierstoff während des Arbeitens des Schlagwerkzeugs 1 zugeführt.

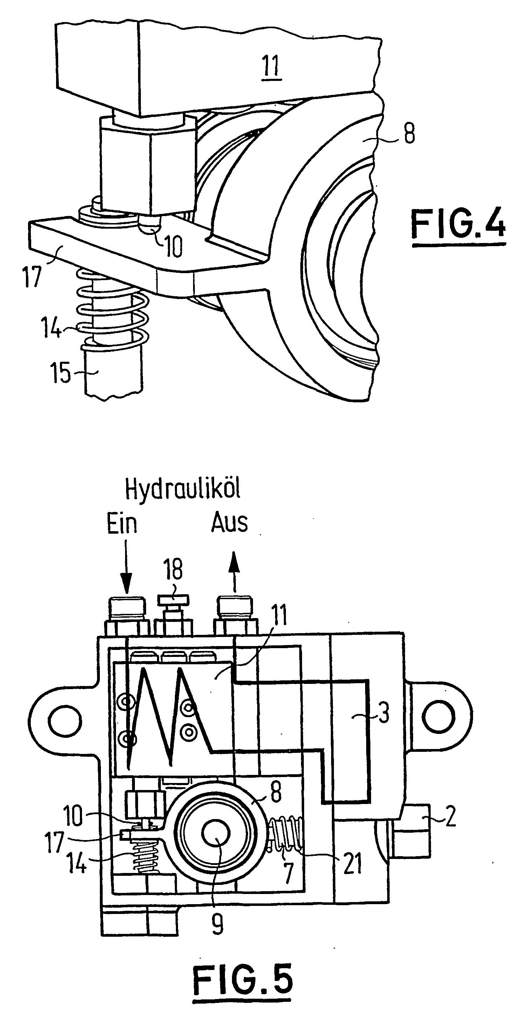

Wie aus Fig. 5 ersichtlich, wird das erwärmte Hydraulik-Druckmedium für den Antrieb des Schlagwerkzeugs 1 nach dem Durchlauf des Progressivverteilers 11 unmittelbar an dem Vorratsbehälter 3 für den Schmierstoff vorbeigeführt, um dort den Wärmeinhalt zur Erwärmung des Schmierstoffes und Verringerung dessen Viskosität zu nutzen.

An dem Progressivverteiler 11 ist ein Durchlaufmengenregler in Form einer Drossel 18 vorgesehen, mit Hilfe welchem bzw. welcher die Geschwindigkeit des Progressivverteilers und damit die Häufigkeit der Schmierstoffabgabe an die Schmierstellen des Schlagwerkzeugs 1 während dessen gesamter Arbeitsdauer eingestellt werden kann.

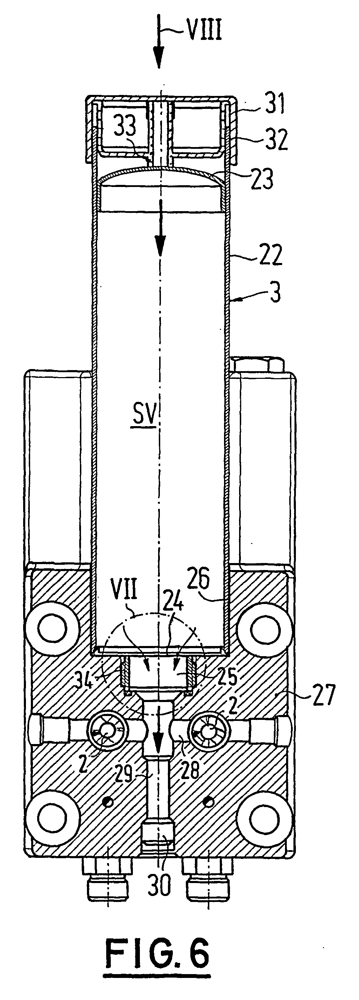

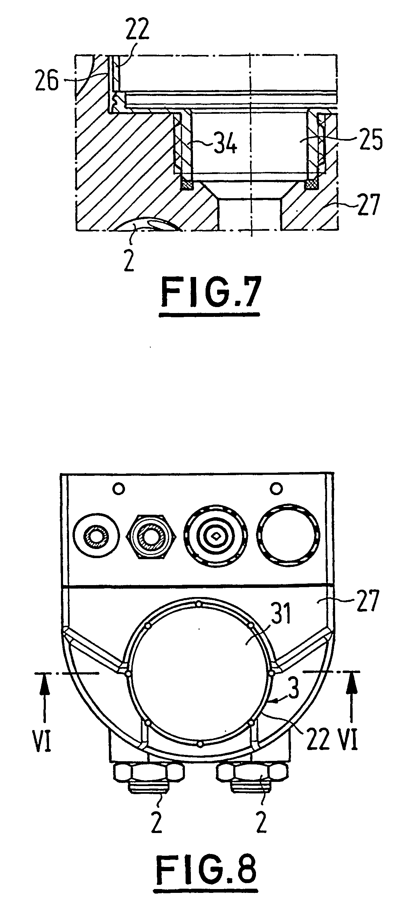

Die Anordnung des Vorratsbehälters 3 an der Schmierstoffpumpe 4 geht aus den Fig. 1, 6, 7 und 8 hervor.

Ein kartuschenartiger Vorratsbehälter 3 weist einen relativ zu einer Wandung 22 axial bewegbaren Kolben 23 und einen festen Boden 24 mit einem Auslass 25 auf, mit dem der Vorratsbehälter 3 in eine Aufnahmebohrung 26 eines Pumpengehäuse 27 eingesetzt ist. An die Aufnahmebohrung 26 schließt sich eine T-förmig verzweigte und jeweils zu einer Schmierstelle führende Leitung 28 an. In dem Leitungsverlauf sind die Pumpenelemente 2 angeordnet, welche für den notwendigen Schmierstoffdruck sorgen. In axialer Verlängerung des Auslass 25 mündet im Bereich der T-förmigen Verzweigung ein Entlüftungskanal 29 in die Schmierstoffleitung 28. Der Entlüftungskanal 29 verfügt über ein Rückschlagventil 30 und mündet mit seinem anderen Ende in die Umgebungsatmosphäre.

Das lediglich schematisch verdeutlichte Rückschlagventil 30 verfügt beispielsweise über ein Kugel-Federelement, dessen Dichtbereich permanent gegen einen Dichtsitz gepresst wird.

An dem freien Ende der Behälterwandung 22 befindet sich ein mittels Gewindeeingriff verdrehbarer und dadurch axial relativ zu der Wandung 22 verstellbarer Deckel 31 mit einem Gewinde 32, welcher mittelbar mit einem Stutzen 33, Distanzstück oder ähnlichem oder gegebenenfalls unmittelbar den Kolben 23 beaufschlagt. Der Kolben 23 kann also durch Verdrehung des Deckels 31 axial in Richtung auf den Auslass 25 gepresst werden, wodurch in dem grundsätzlich drucklosen Vorratsbehälter 3 und der Schmierstoffleitung 28 ein Druck aufgebaut wird. Weil die Schmierstoffleitung 28 durch die (während der Entlüftung) unbewegten Pumpenelemente 2 verschlossen ist, erfolgt eine Entlüftung des Vorratsbehälters 3 über den Entlüftungskanal 29, sobald das Rückschlagventil 30 infolge des Überdrucks öffnet. Wenn der Überdruck mit der eingeschlossenen Luft - ggf. mit einem Schmierstoffanteil - entwichen ist, schließt das Rückschlagventil 30 selbsttätig und der Entlüftungsvorgang ist beendet. Das Ende des Entlüftungsvorganges wird dadurch signalisiert, dass fortgesetzter Druckaufbau infolge Verdrehung des Deckels 31 ausschließlich zu Schmierstoffaustritt führt. Für die Abdichtung des Austrittsbereiches liegt das Ende der Behälterwandung 22 an einer pumpengehäuseseitigen, kragenförmigen Dichtung 34 an, welche in den Behälterauslass 25 einmündet.

### Bezugszeichenliste:

- 1: Schlagwerkzeug, z. B. Hammer
- 2: Pumpenelement
- 3: Vorratsbehälter für Schmierstoff, wie Schmierfett
- 4: Schmierstoffpumpe, z. B. Fettpumpe
- 5: Exzenter
- 6: Exzenterfläche
- 7: Förderkolben
- 8: Freilauf (Einwegkupplung)
- 9: Wellenkörper
- 10: Schaltkolbenende
- 11: Progressivverteiler
- 12: Bypassleitung
- 13: Hydraulik-Druckleitung
- 14: Rückstellfeder
- 15: Stellschraube
- 16: Lager
- 17: Flanschansatz
- 18: Durchlassmengenregler, z. B. Drossel
- 19: Sperrventil
- 20: Rückführungsbehälter
- 21: Feder
- 22: Behälterwandung
- 23: Kolben
- 24: Behälterboden
- 25: Behälterauslass
- 26: Aufnahmebohrung
- 27: Pumpengehäuse
- 28: Schmierstoffleitung
- 29: Entlüftungskanal
- 30: Rückschlagventil
- 31: Deckel
- 32: Gewinde
- 33: Stutzen
- 34: Dichtung

## Patentansprüche

1. Selbsttätige Schmiereinrichtung an einem mittels eines Hydraulik-Druckmediums, z. B. Hydrauliköls, antreibbaren Werkzeug (1) oder dgl., mit einer ein Pumpenelement (2) aufweisenden Schmierstoffpumpe (4) zur Förderung eines Schmierstoffes, z.B. Schmierfettes, aus einem Vorratsbehälter (3) zu mindestens einer mit Schmierstoff zu beaufschlagenden Stelle des Werkzeugs (1), wobei der Schmierstoff entweder aufgrund seines eigenen Fließverhaltens und/oder mittels aufgebrachtem Druck dem Förderraum des Pumpenelements (2) von dem Pumpenelement (2) der Schmierstelle zuführbar ist, sowie mit Mitteln zum Erzeugen eines Pumpenhubes des Pumpenelements (2) beim Betreiben des Werkzeugs (1), **dadurch gekennzeichnet, dass** ein Exzenter (5), dessen Exzenterfläche (6) mit dem Förderkolben (7) des Pumpenelements (2) zusammenwirkt, über einen Freilauf (eine Einwegkupplung) (8) auf einem Wellenkörper (9) gelagert ist und dass der Antrieb des Exzenters (5) über das freie Ende (10) eines der Schaltkolben eines Progressivverteilers (11) erfolgt, welcher in einer das Werkzeug (1) überbrückenden Bypassleitung (12) der Hydraulik-Druckleitung (13) für die Betätigung des Werkzeugs (1) liegt.

2. Schmiereinrichtung nach Anspruch 1, **dadurch gekennzeichnet, dass** die Auslenkung des Exzenters (5) aus einer Ruhelage mittels des Schaltkolbenendes (10) gegen die Wirkung einer Rückstellkraft, insbesondere die einer Rückstellfeder (14) erfolgt.

3. Schmiereinrichtung nach Anspruch 2, **dadurch gekennzeichnet, dass** die Rückstellkraft, z. B. über eine auf die Rückstellfeder (14) wirkende Stellschraube (15) einstellbar ist.

4. Schmiereinrichtung nach einem der Ansprüche 1 bis 3, **dadurch gekennzeichnet, dass** das Hydraulik-Druckmedium für die Betätigung des Werkzeugs (1) an dem Vorratsbehälter (3) für den Schmierstoff vorbeigeleitet wird.

5. Schmiereinrichtung nach einem der Ansprüche 1 bis 4, **dadurch gekennzeichnet, dass** an dem Progressivverteiler (11) eine Durchlassmengenregelung, z. B. in Form einer Drossel, vorgesehen ist.

6. Schmiereinrichtung nach einem der vorhergehenden Ansprüche, **dadurch gekennzeichnet, dass** ein Mittel für einen Druckaufbau in dem Vorratsbehälter (3) und ein Entlüftungskanal (29) für den Vorratsbehälter (3) vorgesehen sind.

7. Schmiereinrichtung nach einem der vorhergehenden Ansprüche, **dadurch gekennzeichnet, dass** der Vorratsbehälter (3) einen Deckel (31) aufweist, welcher axial in Richtung Behälterauslass (25) bewegbar ist, und dabei einen Kolben (23) zur Einwirkung auf den Schmierstoffvorrat (SV) beaufschlagt.

8. Schmiereinrichtung nach einem der vorhergehenden Ansprüche, **dadurch gekennzeichnet, dass** der Deckel (31) auf die Behälterwandung (22) über ein Gewinde (32) aufschraubbar ist.

9. Schmiereinrichtung nach einem der vorhergehenden Ansprüche, **dadurch gekennzeichnet, dass** der Entlüftungskanal (29) in einem Bereich zwischen dem Behälterauslass (25) und einem Pumpenelement (2) von einer Schmierstoffleitung (28) abzweigt.

10. Schmiereinrichtung nach einem der vorhergehenden Ansprüche, **dadurch gekennzeichnet, dass** der Entlüftungskanal (29) mit einem Rückschlagventil (30) versehen ist.

## Claims

1. An automatic lubricating device, located on a tool (1) or the like which is driven by means of a hydraulic pressure medium, for example hydraulic oil, said device comprising a lubricant pump (4) having a pump element (2) for delivering a lubricant, for example lubricating grease, from a supply tank (3) to at least one point on the tool (1) to be lubricated, in which case, either by dint of its own flow properties and/or by means of applied pressure, the lubricant can be supplied to the delivery chamber of the pump element (2) and by the pump element (2) to the lubricating point, said device also comprising means for producing a stroke of the pump element (2) during operation of the tool (1), **characterized in that** a cam (5), whose surface (6) cooperates with the delivery piston (7) of the pump element (2), is mounted on a shaft body (9) via a free-wheel (one-way clutch) (8), and **in that** the cam (5) is driven via the free end (10) of one of the operating pistons of a progressive distributor (11) which is located in a bypass line (12) of the hydraulic pressure line (13) for operating the tool (1), said bypass line (12) spanning the tool (1).

2. A lubricating device according to Claim 1, **characterized in that** the cam (5) is deflected from a resting position by means of the end (10) of the operating piston against the action of a restoring force, in particular that of a return spring (14).

3. A lubricating device according to Claim 2, **characterized in that** the restoring force can be adjusted for example via a regulating screw (15) acting on the return spring (14).

4. A lubricating device according to one of Claims 1 to 3, **characterized in that** the hydraulic pressure medium for operating the tool (1) is conveyed past the supply tank (3) for the lubricant.

5. A lubricating device according to one of Claims 1 to 4, **characterized in that** a flow-control mechanism, for example in the form of a throttle valve, is provided on the progressive distributor (11).

6. A lubricating device according to one of the preceding claims, **characterized in that** means are provided for building up pressure in the supply tank (3) and an air duct (29) is provided for the supply tank (3).

7. A lubricating device according to one of the preceding claims, **characterized in that** the supply tank (3) has a cover (31) which is movable in axial direction towards the tank outlet (25) and thus acts upon a piston (23) for acting upon the lubricant supply (SV).

8. A lubricating device according to one of the preceding claims, **characterized in that** the cover (31) can be screwed onto the tank wall (22) via a screw thread (32).

9. A lubricating device according to one of the preceding claims, **characterized in that** the air duct (29) branches off from a lubricant line (28) in a region between the tank outlet (25) and a pump element (2).

10. A lubricating device according to one of the preceding claims, **characterized in that** the air duct (29) is provided with a check valve (30).

## Revendications

1. Dispositif de lubrification automatique disposé sur un outil (1) pouvant être entraîné par un fluide de pression hydraulique, par exemple de l'huile hydraulique, ou sur un dispositif semblable, avec une pompe à lubrifiant (4) présentant un élément de pompage (2) pour refouler un lubrifiant, par exemple une graisse lubrifiante, depuis un réservoir (3) vers au moins un point de l'outil devant être lubrifié avec le lubrifiant, le lubrifiant pouvant être amené en raison de ses propriétés d'écoulement propres et/ou au moyen d'une pression appliquée dans la chambre d'alimentation de l'élément de pompage (2) et de l'élément de pompage (2) vers le point de lubrification, ainsi qu'avec des moyens pour générer une course de piston de l'élément de pompage (2) lors de l'actionnement de l'outil (1), **caractérisé en ce qu'**un excentrique (5) dont la surface excentrique (6) coopère avec le piston d'alimentation (7) de l'élément de pompage (2) est monté sur un corps de broche (9) par l'intermédiaire d'une roue libre (8) (couplage ne pouvant être actionné que dans un sens), et **en ce que** l'entraînement de l'excentrique (5) est réalisé par l'extrémité libre (10) d'un des pistons d'actionnement d'un distributeur progressif (11) qui est placé dans une conduite bypass (12) de la conduite sous pression hydraulique (13) pour l'actionnement de l'outil en courcircuitant l'outil (1).

2. Dispositif de lubrification selon la revendication 1, **caractérisé en ce que** le déplacement de l'excentrique (5) d'une position de repos au moyen de l'extrémité du piston d'actionnement (10) se fait contre l'effet d'une force de rappel, notamment d'un ressort de rappel (14).

3. Dispositif de lubrification selon la revendication 2, **caractérisé en ce que** la force de rappel peut être ajustée, par exemple par l'intermédiaire d'une vis de réglage (15) agissant sur le ressort de rappel (14).

4. Dispositif de lubrification selon l'une des revendications 1 à 3, **caractérisé en ce que** le fluide de pression hydraulique pour l'actionnement de l'outil (1) est transporté en passant à proximité du réservoir (3) pour le lubrifiant.

5. Dispositif de lubrification selon l'une des revendications 1 à 4, **caractérisé en ce qu'**un régleur de quantité traversante est prévu dans le distributeur progressif (11), par exemple sous la forme d'un restricteur.

6. Dispositif de lubrification selon l'une des revendications précédentes, **caractérisé en ce qu'**il est prévu des moyens pour appliquer une pression dans le réservoir (3) et une canal d'aération (29) pour le réservoir (3).

7. Dispositif de lubrification selon l'une des revendications précédentes, **caractérisé en ce que** le réservoir (3) est muni d'un couvercle (31) qui peut être déplacé axialement en direction de la sortie du récipient (25) en opérant sur un piston (23) pour agir sur la réserve de lubrifiant (SV).

8. Dispositif de lubrification selon l'une des revendications précédentes, **caractérisé en ce que** le couvercle (31) peut être vissé sur la paroi du récipient (22) par l'intermédiaire d'une filetage (32).

9. Dispositif de lubrification selon l'une des revendications précédentes, **caractérisé en ce que** le canal d'aération (29) part d'une conduite de lubrifiant dans une zone comprise entre la sortie du récipient (25) et un élément de pompage (3).

10. Dispositif de lubrification selon l'une des revendications précédentes, **caractérisé en ce que** le canal d'aération (29) est muni d'une valve antiretour (30).
